# EUROPÄISCHE PATENTSCHRIFT

(11) **EP 1 227 703 B1**
(45) Veröffentlichungstag und Bekanntmachung des Hinweises auf die Patenterteilung: **04.04.2007**
(21) Anmeldenummer: 02000936.1
(22) Anmeldetag: 16.01.2002
(51) Int. Cl.: H05B 37/02

(54) **Einrichtung und Verfahren zur Steuerung einer Beleuchtungseinrichtung**
Device and method for driving a lighting device
Appareil et méthode pour commander un appareil d' éclairage

(30) Priorität: 30.01.2001 DE 10104159
(43) Veröffentlichungstag der Anmeldung: 31.07.2002
(73) Patentinhaber: ABB PATENT GmbH, 68526 Ladenburg (DE)
(72) Erfinder: Blomberg, Lothar, Dipl.-Ing., 58809 Neuenrade (DE); Rümenapf, Peter, Dipl.-Ing., 58579 Schalksmühle (DE); Gräfe, Martin, Dr.-Ing., 58513 Lüdenscheid (DE); Götte, Karsten, Dipl.-Ing., 58513 Lüdenscheid (DE)
(74) Vertreter: Miller, Toivo

(56) Entgegenhaltungen:
- DE-A- 19 514 972
- DE-A- 19 801 065
- DE-A- 19 814 591
- DE-U- 29 903 904

## Beschreibung

Die Erfindung bezieht sich auf eine Einrichtung und ein Verfahren zur Steuerung einer Beleuchtungseinrichtung. Insbesondere bezieht sich die Erfindung auf ein Verfahren zur Berücksichtigung der Umgebungshelligkeit eines Präsenz- oder Bewegungsmelders.

Präsenz- und Bewegungsmelder arbeiten in der Form, daß mittels Infrarot-, Radar- und anderer Sensoren Personen detektiert werden, und unter anderem mittels eines Leistungsteiles des Melders eine Beleuchtungseinrichtung eingeschaltet wird. Bewegungsmelder werden häufig in Außenbereichen eines Gebäudes, z. B. am Hauseingang eingesetzt, aber immer häufiger auch in Innenbereichen, wie Flure, Treppenhäuser, Toiletten, Büroräume etc.

Üblicherweise ist ein Lichtfühler integriert, der die Umgebungshelligkeit ermittelt, und eine Beleuchtungseinschaltung nur dann zuläßt, wenn ein bestimmter, gegebenenfalls auch einstellbarer Helligkeits-Schwellwert unterschritten ist. Als Einschaltkriterium ist dann definiert, daß z. B. eine Personendetektion und eine Schwellwertunterschreitung gleichzeitig gegeben sein müssen.

In den meisten Fällen arbeiten solche Geräte mit einer uneingeschränkten Nachtriggerfunktion. Das bedeutet, daß nach dem Einschalten der Beleuchtungseinschaltung jede weitere Personendetektion innerhalb einer bestimmten, z. B. einstellbaren Nachlaufzeit tN zu einer weiteren Verlängerung der Einschaltdauer führt, jeweils verlängert um die Dauer der eingestellten Nachlaufzeit tN. Bei diesem Verlängerungsvorgang werden die tatsächlichen Lichtverhältnisse nicht mehr berücksichtigt. Ein so ausgestatteter elektronischer Schalter läßt also bei sich häufig wiederholender Personendetektion die Beleuchtung eingeschaltet, auch wenn sich die Außenlichtverhältnisse zwischenzeitlich dahingehend geändert haben, daß die Beleuchtung eigentlich nicht mehr benötigt wird. Dieser Nachteil wird bei bekannten Meldeeinrichtungen in Kauf genommen, um kompliziertere Verfahren zu vermeiden; unter anderem aber auch in der Annahme, daß es in den meisten Anwendungsfällen doch kurzfristig zu einer Abschaltung der Beleuchtung kommen wird, weil die Zeitspanne der Personen-Abwesenheit bzw. Nichtdetektion größer als die Nachlaufzeit tN sein wird. Diese Annahme ist in vielen Fällen zulässig. Jedoch mit zunehmenden Anwendungen in Innenbereichen, speziell in Büroräumen, hat sich gezeigt, daß oftmals eine so hohe Detektionshäufigkeit gegeben ist, daß es zu keiner Abschaltung der Beleuchtung kommen kann.

Aufgrund dieses erheblichen Nachteiles sind Verfahren entwickelt worden, die sich ändernde Außenlichtverhältnisse berücksichtigen und mittels einer übergeordneten Abschalteinrichtung eine Abschaltung der Beleuchtung bewirken, wenn sie entsprechend dem eingestellten Lichtwert nicht mehr benötigt wird.

Ein solches Verfahren ist aus der EP 0 942 632 A1 bekannt. Danach werden Lichtsensoren mit speziellen Filtern oder auch IR-Sendedioden eingesetzt, die das Außenlicht über einen Wellenlängenbereich von ca. 800 nm bis 950 nm, d.h. die IR-Anteile bewerten. Es werden dabei nur Leuchtmittel eingesetzt bzw. empfohlen, die entsprechend ihres Strahlungsspektrums in dem besagten Wellenlängenbereich keine Strahlung erzeugen, wie z.B. Fluoreszenzlampen, Leuchtstofflampen, oder Energiesparlampen (FL / PL). Man spricht daher im Zusammenhang mit diesen Lichtsensoren auch von "echter Tageslichtmessung", da, richtige Lampenbestückung unterstellt, nur IR-Anteile des natürlichen Außenlichts erfaßt werden. Die sichtbare Strahlung des Außenlichts liegt im Bereich von 380 - 780 nm.

Nachteilig ist jedoch hierbei, daß sich eine deutliche Einschränkung bei der Wahl geeigneter Leuchtmittel ergibt. Glüh- und Niedervolthalogenlampen produzieren beispielsweise über einen weiten Wellenlängenbereich Strahlung und können daher zur Nutzung des Verfahrens nicht oder nur mit Einschränkung eingesetzt werden.

Ein anderes Verfahren ist aus der Offenlegungsschrift DE 198 14 591 A1 bekannt. Hierbei werden Lichtsensoren eingesetzt, die den sichtbaren Wellenlängenbereich meßtechnisch möglichst voll erfassen. Kunstlicht und natürliches Außenlicht werden somit gleichermaßen in die Messung einbezogen. Kunstlicht wird dabei eingeschaltet, wenn ein erster Schwellenwert unterschritten ist und eine Personendetektion gegeben ist. Während der Einschaltdauer des Kunstlichtes wird der Summenwert von Kunstlicht und Außenlicht laufend ermittelt und mit einem zweiten höheren Schwellenwert verglichen. Wird der zweite Schwellenwert durch Zunahme des Außenlichtes überschritten, kommt es zu einer übergeordneten Lichtabschaltung. Es sind Zeit- und Lichtwerthysteresen vorgesehen, um Instabilitäten (Schwingen des Systems) oder zu flinke (störende) Änderungen des Schaltzustandes zu unterbinden. Im wesentlichen soll der zweite Schwellenwert um den Betrag der Helligkeitsdifferenz höher liegen als der erste Schwellenwert, der sich als Sprung durch die Zuschaltung des Kunstlichtes ergibt.

Ein Nachteil dieses bekannten Verfahrens besteht darin, daß die Lichtauswertung in der Praxis nicht hinreichend genau ist, so daß einerseits die erwähnte Instabilität (d.h. zu frühe Abschaltung mit anschließender Wiedereinschaltung) auftreten und andererseits trotz hinreichend großer Außenhelligkeitszunahme ein zu spätes oder gar kein Ausschalten erfolgen kann, was die Brauchbarkeit einschränkt. Zur Verbesserung des Verfahrens wird auf eine Anordnung des Lichtsensors in Verbindung mit einem linearen oder auch nichtlinearen Verstärker zwecks Kompensation der Kennlinie des Helligkeitssensors hingewiesen. Die Kennlinien sind allerdings sowohl bezüglich der Kennliniensteilheit als auch des Absolutwertes so stark toleranzbehaftet, daß nicht präzise vorausgesagt bzw. berechnet werden kann, wo jeweils der erforderliche zweite Schwellenwert präzise liegen muß. Dies führt zu der genannten Einschränkung der Brauchbarkeit.

Davon ausgehend liegt der Erfindung die Aufgabe zugrunde, ein Verfahren zur Steuerung einer Beleuchtungseinrichtung anzugeben, das ohne Beschränkung auf bestimmte Leuchtmittel ein sicheres Abschalten bei ausreichendem Außenlicht bewirkt. Außerdem soll eine Einrichtung zur Durchführung des Verfahrens angegeben werden.

Diese Aufgabe wird durch ein Verfahren zur Steuerung einer Beleuchtungseinrichtung gelöst, das die im Anspruch 1 angegebenen Merkmale aufweist. Vorteilhafte Ausgestaltungen und eine entsprechende Einrichtung sind in weiteren Ansprüchen angegeben.

Mit der Erfindung wird demnach im wesentlichen vorgeschlagen, mit nur einem Schwellwert und einer Korrektur eines erfaßten Umgebungshelligkeitswerts zu arbeiten. Die Korrektur, die sowohl die Charakteristik des eingesetzten Lichtfühlers, als auch die jeweils aktuellen Helligkeitswerte berücksichtigt, bewirkt, daß keine Beschränkung auf bestimmte Leuchtmittel erforderlich ist, und trotzdem ein sicherer Betrieb erreicht wird.

Eine weitere Beschreibung der Erfindung und deren Vorteile erfolgt nachstehend anhand eines in Zeichnungsfiguren dargestellten Ausführungsbeispiels.

Es zeigt:
- Fig. 1: ein Diagramm zur Erläuterung des Verfahrens,
- Fig. 2: eine Anordnung zur Durchführung eines Kalibriervorgangs, und
- Fig. 3: ein Blockschema einer Einrichtung zur Steuerung einer Beleuchtungseinrichtung.

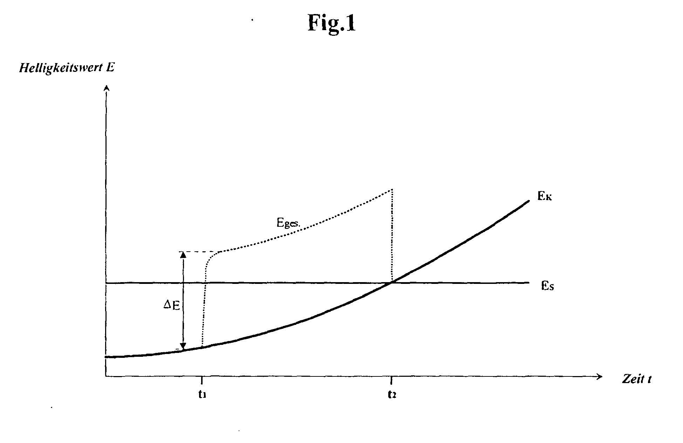

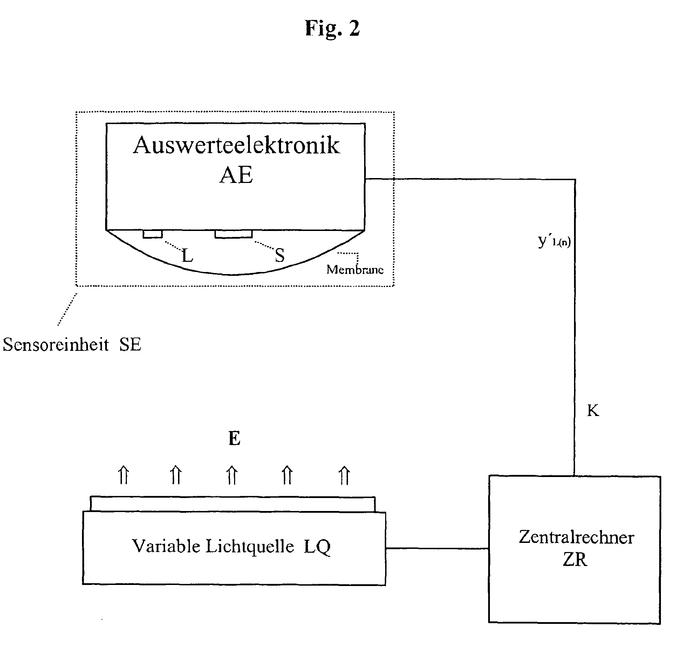

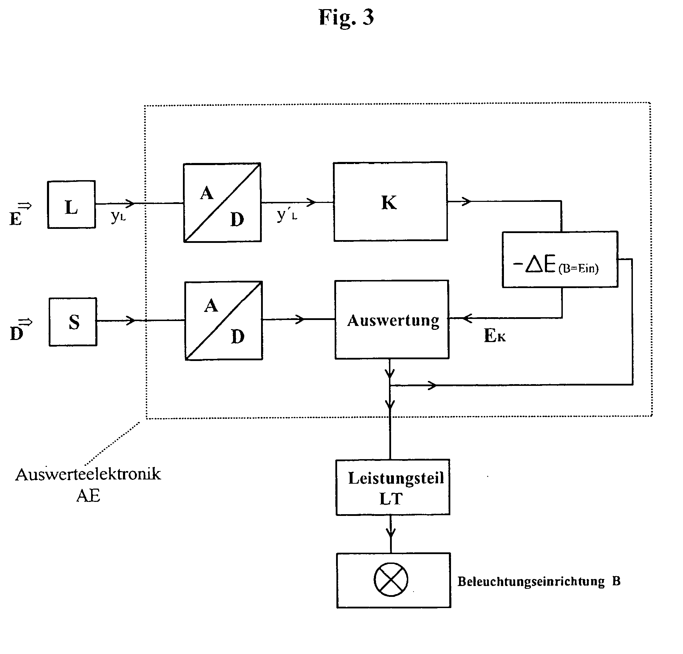

In Fig. 1 sind zur Erläuterung des Verfahrens zur Steuerung einer Beleuchtungseinrichtung Helligkeitswerte E als Funktion der Zeit t aufgetragen. Im Diagramm ist eine einstellbare Helligkeitsschwelle Es eingetragen, die einen Umgebungslichtwert bei ausgeschalteter Beleuchtungseinrichtung markiert, unterhalb dem die Beleuchtungseinrichtung im Fall einer Personendetektion eingeschaltet werden soll. Bei einer Helligkeit des Umgebungslichts oberhalb des Helligkeitsschwellwerts Es soll im Fall einer Personendetektion die Beleuchtungseinrichtung nicht eingeschaltet werden, bzw. soll eine zuvor bereits eingeschaltete Beleuchtungseinrichtung ausgeschaltet werden. Dies wird verfahrensgemäß dadurch erreicht, daß für einen Vergleich mit dem Helligkeitsschwellwert Es nicht ein mittels eines Lichtsensors L (vergl. Fig. 2 und 3) erfaßter Umgebungslichtwert Eges herangezogen wird, der ein Gesamtwert von natürlichem Umgebungs- oder Außenlicht und gegebenenfalls Kunstlicht bei eingeschalteter Beleuchtungseinrichtung ist, sondern ein korrigierter Umgebungshelligkeitswert Ek. Die Lichtwertkorrektur erfolgt in mehrfacher Hinsicht. In allen Betriebsphasen erfolgt eine Korrektur unter Berücksichtigung der Lichtsensor-Charakteristik, die werksseitig ermittelt und in einer Einrichtung zur Steuerung der Beleuchtungseinrichtung gespeichert wird, wie unten noch erläutert wird. Außerdem wird bei eingeschalteter Beleuchtung ein durch die Beleuchtung bedingter Helligkeitszuwachs ΔE vom Gesamthelligkeitswert Eges subtrahiert. Dadurch steigt der korrigierte Umgebungshelligkeitswert Ek beispielsweise zu einem Zeitpunkt t₁, in dem die Beleuchtung eingeschaltet wird, nicht an. Mit gestrichelter Linie ist in Fig. 1 eingetragen, wie der Wert Ek ohne Subtraktion des Helligkeitszuwachses ΔE ansteigen würde. Zum Zeitpunkt t₂ erreicht der korrigierte Umgebungshelligkeitswert Ek den Schwellwert Es und die Beleuchtung wird abgeschaltet.

Eine weitere, in Fig. 1 jedoch nicht dargestellte Korrektur, kann zur Stabilisierung des Betriebs vorgesehen werden, indem jeweils nach dem Einschalten der Beleuchtung dem Helligkeitsschwellwert Es ein Hysteresewert Ehyst aufaddiert wird, der nach der Abschaltung der Beleuchtung wieder subtrahiert wird. Anstelle oder zusätzlich zu dieser Schwellwerterhöhung kann auch eine Abschaltverzögerungszeit vorgesehen werden, um eine Abschaltung bei nur kurzfristiger oder geringfügiger Überschreitung des Schwellwerts Es zu erreichen. Es ist ein Vorteil des Verfahrens, daß der Hysteresewert relativ klein sein kann, da mit einem sehr genau korrigierten Umgebungshelligkeitswert gearbeitet wird.

Fig. 2 zeigt eine Sensoreinheit SE in einer Kalibrier-Anordnung. Die Sensoreinheit SE bildet zusammen mit einem Leistungsteil LT (in Fig. 3 dargestellt) eine Einrichtung zur Steuerung einer Beleuchtungseinrichtung B (ebenfalls in Fig. 3 dargestellt), beispielsweise einen Bewegungsmelder oder Präsenzmelder.

Die Sensoreinheit SE enthält einen Lichtsensor L und einen Sensor S zur Personendetektion, sowie eine Auswerteelektronik AE. Als Lichtsensor L ist beispielsweise ein Photowiderstand geeignet. Der Sensor S kann beispielsweise ein Infrarotsensor sein, wobei dann eine die Sensoren abdeckende Membran mit Linsenfunktion üblich ist. In Bewegungsmelder oder Präsenzmelder sind jedoch auch andere Sensoren S anwendbar.

In der dargestellten Kalibrier-Anordnung ist die Sensoreinheit SE mit einem Zentralrechner ZR über eine Datenleitung für bidirektionalen Datenaustausch verbunden, der Zentralrechner ZR wiederum mit einer variablen Lichtquelle LQ. Mit dieser Anordnung wird werksseitig für jedes Gerät, z. B. Bewegungsmelder, eine Korrekturfunktion K ermittelt, die im Gerätebetrieb zur Berechnung des korrigierten Umgebungshelligkeitswerts Ek verwendet wird.

Die Kalibrierung ist erforderlich, um die Charakteristik des eingesetzten Lichtfühlers L und des nachgeschalteten A/D-Wandlers (vergl. Fig. 3) zu erfassen. Es wird also zweckmäßigerweise bei der Kalibrierung nicht die Ausgangsgröße y_{L} des Lichtsensors L, sondern die digitalisierte Ausgangsgröße y'_{L} erfaßt. Zwischen der digitalisierten Ausgangsgröße y'_{L} und der Helligkeit E (in Lux) besteht ein funktioneller Zusammenhang, der z.B. im Fall eines Photowiderstands im wesentlichen logarithmisch ist, aber von Eigenschaften des jeweiligen Bauteils abhängt. Deshalb kann zwar mit Lichtsensortyp-charakteristischen Kennlinien gearbeitet werden, die aber an den individuellen Sensor mittels der Kalibrierung angepaßt werden. Dazu werden im Zentralrechner ZR mehrere, z.B. drei Wertepaare (y'_{L},E) erfaßt, mindestens so viele, wie der funktionelle Zusammenhang unbekannte, bauteilabhängige Parameter enthält. Im Rechner wird ein Gleichungssystem aufgestellt, das für jedes Wertepaar (y'_{L},E) eine Gleichung enthält. Dieses Gleichungssystem wird mit Hilfe gängiger numerischer Verfahren gelöst, und somit die bauteilabhängigen Parameter berechnet. Damit ist der Zusammenhang zwischen der digitalisierten Ausgangsgröße y'_{L} und der Helligkeit E (in Lux) bekannt, und wird z.B. in Form einer Tabelle als Basis der Korrekturfunktion K in der Auswerteelektronik AE in einem nicht flüchtigen Speicher abgelegt. Die Auswerteelektronik AE kann dafür eingerichtet sein, mittels eines Interpolationsprogramms noch höher aufzulösen. Die für den Kalibriervorgang benötigten unterschiedlichen Helligkeiten E werden mittels der variablen Lichtquelle LQ und deren Ansteuerung durch den Zentralrechner ZR erzeugt.

Fig. 3 zeigt ein Blockschema mit Funktionsblöcken einer Einrichtung zur Steuerung einer Beleuchtungseinrichtung B, die von der Auswerteelektronik AE über ein Leistungsteil LT gesteuert wird. In der Auswerteelektronik AE werden digitalisierte Ausgangssignale des Sensors S zur Personendetektion, der elektromagnetische Strahlung D erfaßt, einer Auswerteeinrichtung zugeführt. Außerdem werden digitalisierte Ausgangssignale y'_{L} des Lichtsensors L nach Korrektur mittels der Korrekturfunktion K und gegebenenfalls unter Abzug des Helligkeitszuwachses ΔE - bei eingeschalteter Beleuchtung - als korrigierte Umgebungshelligkeitswerte Ek der Auswerteeinrichtung zugeführt, wo sie mit den digitalisierten Ausgangssignalen des Sensors S verknüpft werden.

## Patentansprüche

1. Verfahren zur Steuerung einer Beleuchtungseinrichtung (B), wobei
a) mittels einer Sensoreinheit (SE), die einen Sensor (S) zur Personendetektion, einen Lichtsensor (L) zur Erfassung der Umgebungshelligkeit (Eges) und eine Auswerteelektronik (AE) enthält, die Beleuchtungseinrichtung (B) dann eingeschaltet wird, wenn eine Personendetektion erfolgt ist, und zu diesem ersten Zeitpunkt (t₁) außerdem ein auf der Umgebungshelligkeit (Eges) basierender korrigierter Umgebungshelligkeitswert (Ek) kleiner als ein vorgegebener Schwellwert (Es) ist,
b) eine Abschaltung der Beleuchtungseinrichtung (B) nach Ablauf einer Personendetektions-Nachlaufzeit erfolgt, oder sobald der korrigierte Umgebungshelligkeitswert (Ek) den Schwellwert (Es) überschreitet, wobei
c) zur Bildung des korrigierten Umgebungshelligkeitswerts (Ek) in einem Zeitraum unmittelbar nach dem Einschalten der Beleuchtungseinrichtung (B) zum ersten Zeitpunkt (t₁) bis unmittelbar nach dem Abschalten der Beleuchtungseinrichtung (B) zu einem zweiten Zeitpunkt (t₂), von der erfaßten gesamten Umgebungshelligkeit (Eges) ein von der Beleuchtungseinrichtung (B) erzeugter Helligkeitszuwachs (△E) der Umgebungshelligkeit (Eges) subtrahiert wird,
**dadurch gekennzeichnet,**
d) **dass** die Bildung des korrigierten Umgebungshelligkeitswerts (Ek) unter Anwendung einer in der Auswerteelektronik (AE) gespeicherten Korrekturfunktion (K) erfolgt, wobei die Korrekturfunktion (K) die Charakteristik des Lichtsensors (L) berücksichtigt,
e) und **dass** die Korrekturfunktion (K) bei unterschiedlichen Helligkeiten werksseitig für den individuellen Sensor mittels eines Kalibriervorgangs ermittelt und in der Auswerteelektronik (AE) gespeichert wird.

2. Verfahren nach Anspruch 1, **dadurch gekennzeichnet, dass** der Helligkeitszuwachs (ΔE) jeweils unmittelbar nach dem Einschalten der Beleuchtungseinrichtung (B) ermittelt wird.

3. Verfahren nach Anspruch 2, **dadurch gekennzeichnet, dass** der Helligkeitszuwachs (ΔE) zusätzlich zu mindestens einem weiteren Zeitpunkt nach dem Einschalten der Beleuchtungseinrichtung (B) ermittelt und bei der Bildung des korrigierten Umgebungshelligkeitswerts (Ek) berücksichtigt wird.

4. Verfahren nach einem der vorstehenden Ansprüche, **dadurch gekennzeichnet, dass** in der jeweiligen Betriebsphase vor dem Einschalten der Beleuchtungseinrichtung (B) aus der erfaßten Umgebungshelligkeit (Eges) allein unter Anwendung der Korrekturfunktion (K) ein korrigierter Umgebungshelligkeitswert (Ek) gebildet und mit dem Schwellwert (Es) verglichen wird.

5. Verfahren nach einem der vorstehenden Ansprüche, **dadurch gekennzeichnet, dass** der Schwellwert (ES) jeweils nach dem Einschalten der Beleuchtungseinrichtung (B) um einen Hysteresewert (EHyst) erhöht wird, wobei die Höhe des Hysteresewerts (EHyst) abhängig vom unmittelbar nach dem Einschaltzeitpunkt gegeben korrigierten Umgebungshelligkeitswert (Ek) einschließlich Helligkeitszuwachs (△E) festgelegt wird.

6. Verfahren nach Anspruch 5, **dadurch gekennzeichnet, dass** der Hysteresewert (EHyst) etwa proportional zum durch den korrigierten Umgebungshelligkeitswert (Ek) einschließlich Helligkeitszuwachs (ΔE) gegeben Gesamthelligkeitswert festgelegt wird.

7. Einrichtung zur Steuerung einer Beleuchtungseinrichtung (B), die eine Sensoreinheit (SE) mit einem Sensor (S) zur Personendetektion und einem Lichtsensor (L) zur Erfassung der Umgebungshelligkeit (Eges), eine Auswerteelektronik (AE) und einen Leistungsteil (LT) für den Anschluß der Beleuchtungseinrichtung (B) enthält, und die dafür eingerichtet ist, die Beleuchtungseinrichtung (B) dann einzuschalten, wenn eine Personendetektion erfolgt ist, und zu diesem ersten Zeitpunkt (t₁) außerdem ein auf der Umgebungshelligkeit (Eges) basierender korrigierter Umgebungshelligkeitswert (Ek) kleiner als ein vorgegebener Schwellwert (Es) ist, und
- die Auswerteelektronik (AE) dafür eingerichtet ist, eine Abschaltung der Beleuchtungseinrichtung (B) nach Ablauf einer Personendetektions-Nachlaufzeit durchzuführen, oder sobald der korrigierte Umgebungshelligkeitswert (Ek) den Schwellwert (Es) überschreitet, und wobei
- die Auswerteelektronik (AE) dafür eingerichtet ist, zur Bildung des korrigierten Umgebungshelligkeitswerts (Ek), in einem Zeitraum unmittelbar nach dem Einschalten der Beleuchtungseinrichtung (B) zum ersten Zeitpunkt (t₁), bis unmittelbar nach dem Abschalten der Beleuchtungseinrichtung (B) zu einem zweiten Zeitpunkt (t₂), einen von der Beleuchtungseinrichtung (B) erzeugten Helligkeitszuwachs (ΔE) der Umgebungshelligkeit (Eges) vom erfaßten gesamten Umgebungshelligkeitswert (Eges) zu subtrahieren;
**dadurch gekennzeichnet,**
- **dass** die Auswerteelektronik (AE) dafür eingerichtet ist, die Bildung des korrigierten Umgebungshelligkeitswerts (Ek) unter Anwendung einer in der Auswerteelektronik (AE) gespeicherten Korrekturfunktion (K) durchzuführen, wobei die Korrekturfunktion (K) die Charakteristik des Lichtsensors (L) berücksichtigt und
- **dass** die Auswerteelektronik (AE) einen nicht flüchtigen Datenspeicher zur Speicherung einer bei unterschiedlichen Helligkeiten werksseitig für den individuellen Sensor mittels eines Kalibriervorgangs ermittelten Korrekturfunktion (K) enthält.

8. Einrichtung nach Anspruch 7, **dadurch gekennzeichnet, dass** die Auswerteelektronik (AE) dafür eingerichtet ist, den Helligkeitszuwachs (ΔE) jeweils unmittelbar nach dem Einschalten der Beleuchtungseinrichtung (B) zu ermitteln.

9. Einrichtung nach Anspruch 8, **dadurch gekennzeichnet, dass** die Auswerteelektronik (AE) dafür eingerichtet ist, den Helligkeitszuwachs (ΔE) zusätzlich zu mindestens einem weiteren Zeitpunkt nach dem Einschalten der Beleuchtungseinrichtung (B) zu ermitteln, und bei der Bildung des korrigierten Umgebungshelligkeitswerts (Ek) zu berücksichtigen.

10. Einrichtung nach einem der Ansprüche 7 bis 9, **dadurch gekennzeichnet, dass** sie ein Präsenzmelder oder Bewegungsmelder ist.

11. Einrichtung nach einem der vorstehenden Ansprüche, **dadurch gekennzeichnet, dass** die Auswerteelektronik (AE) dafür eingerichtet ist, in der jeweiligen Betriebsphase vor dem Einschalten der Beleuchtungseinrichtung (B) aus der erfaßten Umgebungshelligkeit (Eges) allein unter Anwendung der Korrekturfunktion (K) einen korrigierten Umgebungshelligkeitswert (Ek) zu bilden, und mit dem Schwellwert (Es) zu vergleichen.

12. Einrichtung nach einem der Ansprüche 7 bis 11, **dadurch gekennzeichnet, dass** die Auswerteelektronik (AE) dafür eingerichtet ist, den Schwellwert (ES) jeweils nach dem Einschalten der Beleuchtungseinrichtung (B) um einen Hysteresewert (EHyst) zu erhöhen, wobei die Höhe des Hysteresewerts (EHyst) abhängig vom unmittelbar nach dem Einschaltzeitpunkt gegeben korrigierten Umgebungshelligkeitswert (Ek) einschließlich Helligkeitszuwachs (ΔE) festgelegt wird.

## Claims

1. A method for controlling a lighting device (B), with
a) the lighting device (B) being switched on by means of a sensor unit (S) which comprises a sensor (S) for detecting persons, a light sensor (L) for detecting the ambient luminosity (Eges) and an electronic evaluation unit (AE) when the detection of a person has occurred and at such first point in time (t₁) a corrected ambient luminosity value (Ek) based on the ambient luminosity (Eges) is also lower than a predetermined threshold value (Es);
b) there is a cut-off of the lighting device (B) after the expiration of a follow-up time for detecting a person or once the corrected ambient luminosity value (Ek) exceeds the threshold value (Es), with
c) an increase in the luminosity (ΔE) of the ambient luminosity (Eges) as generated by the lighting device (B) is subtracted from the detected entire ambient luminosity (Eges) for forming the corrected ambient luminosity value (Ek) in a time directly after the activation of the lighting device (B) at the first point in time (t₁) until directly after the cut-off of the lighting device (B) at a second point in time (t₂);
**characterized in that**
d) the formation of the corrected ambient luminosity value (Ek) occurs by using a correction function (K) stored in the electronic evaluation unit (AE), with the correction function (K) taking into account the characteristics of the light sensor (L);
e) and that the correction function (K) is factory-set for the individual sensor by means of a calibrating process and is stored in the electronic evaluation unit (AE).

2. A method according to claim 1, **characterized in that** the increase in luminosity (ΔE) is always determined directly after the activation of the lighting device (B).

3. A method according to claim 2, **characterized in that** the increase in luminosity (ΔE) is additionally determined at at least one further point in time after the activation of the lighting device (B) and is taken into account in the formation of the corrected ambient luminosity value (Ek).

4. A method according to one of the preceding claims, **characterized in that** in the respective operating phase prior to the activation of the lighting device (B) a corrected ambient luminosity value (Ek) is formed from the detected ambient luminosity (Eges) alone by using the correction function (K) and is compared with the threshold value (Es).

5. A method according to one of the preceding claims, **characterized in that** the threshold value (ES) is increased each time after the activation of the lighting device (B) by a hysteresis value (EHyst), with the level of the hysteresis value (EHyst) being determined depending on the corrected ambient luminosity value (Ek) given directly after the activation time, including the increase in luminosity (ΔE).

6. A method according to claim 5, **characterized in that** the hysteresis value (EHyst) is determined approximately proportional to the total luminosity value given by the corrected ambient luminosity value (Ek) including the increase in luminosity (ΔE).

7. A device for controlling a lighting device (B) which comprises a sensor unit (SE) with a sensor for detecting persons and a light sensor (L) for detecting the ambient luminosity (Eges), an electronic evaluation unit (AE) and a power section (LT) for the connection of the lighting device (B) and which is arranged to activate the lighting device (B) when the detection of a person has occurred, and at such first point in time (t₁) a corrected ambient luminosity value (Ek) based on the ambient luminosity (Eges) is smaller than a predetermined threshold value (Es), and
- the electronic evaluation unit (AE) is arranged to perform a cut-off of the lighting device after the expiration of a follow-up time for detecting a person or once the corrected ambient luminosity value (Ek) exceeds the threshold value (Es), with
- the electronic evaluation unit (AE) being arranged, for the purpose of forming the corrected ambient luminosity value (Ek), to subtract an increase in luminosity (ΔE) of the ambient luminosity (Eges) as produced by the lighting device (B) from the detected entire ambient luminosity value (Eges) in a period of time directly after the activation of the lighting device (B) at the first time (t₁) until directly after the cut-off of the lighting device (B) at a second point in time (t₂);
**characterized in that**
- the electronic evaluation unit (AE) is arranged to perform the formation of the corrected ambient luminosity value (Ek) by using a correction function (K) stored in the electronic evaluation unit (AE), with the correction function (K) considering the characteristics of the light sensor (L), and
- that the electronic evaluation unit (A) comprises a non-volatile data storage unit for storing a correction function (K) determined at different luminosities on the factory side for the individual sensor by means of a calibration process.

8. A device according to claim 7, **characterized in that** the electronic evaluation unit (AE) is arranged for determining the increase in luminosity (ΔE) each time directly after the activation of the lighting device (B).

9. A device according to claim 8, **characterized in that** the electronic evaluation unit (AE) is arranged for determining the increase in luminosity (ΔE) in addition to at least one further point in time after the activation of the lighting device (B) and for considering the same in the formation of the corrected ambient luminosity value (Ek).

10. A device according to one of the claims 7 to 9, **characterized in that** it is a presence or motion detector.

11. A device according to one of the preceding claims, **characterized in that** the electronic evaluation unit (AE) is arranged for forming a corrected ambient luminosity value (Ek) in the respective operating phase prior to the activation of the lighting device (B) from the detected ambient luminosity (Eges) alone by using the correction function (K) and for comparing the same with the threshold value (Es).

12. A device according to one of the claims 7 to 11, **characterized in that** the electronic evaluation unit (AE) is arranged for increasing the threshold value (ES) each time after the activation of the lighting device (B) by a hysteresis value (EHyst), with the level of the hysteresis value (EHyst) being determined depending on the corrected ambient luminosity value (Ek) given directly after the activation time, including the increase in luminosity (ΔE).

## Revendications

1. Procédé pour la commande d'une installation d'éclairage (B), dans lequel
a) au moyen d'une unité de capteurs (SE) contenant un capteur (S) pour la détection de personnes, un photocapteur (L) pour la détection de la luminosité ambiante (Eges) et un circuit électronique d'interprétation (AE), l'installation d'éclairage (B) est allumée lorsqu'une personne a été détectée et qu'à ce premier moment (t₁), une valeur de luminosité ambiante corrigée (Ek) basée sur la luminosité ambiante (Eges) est inférieure à un seuil (Es) prédéterminé,
b) l'installation d'éclairage (B) est éteinte après l'écoulement d'un délai suivant la détection d'une personne ou dès que la valeur de luminosité ambiante corrigée (Ek) dépasse le seuil (Es),
c) la valeur de luminosité ambiante corrigée (Ek) étant formée, pendant une période suivant immédiatement l'allumage de l'installation d'éclairage (B) au premier moment (t₁) et jusqu'à immédiatement après l'extinction de l'installation d'éclairage (B) à un deuxième moment (t₂), en soustrayant de la luminosité ambiante totale détectée (Eges) une augmentation de la luminosité (ΔE) de la luminosité ambiante (Eges) produite par l'installation d'éclairage (B),
**caractérisé en ce que**
d) la valeur de luminosité ambiante corrigée (Ek) est formée en utilisant une fonction de correction (K) mémorisée dans le circuit électronique d'interprétation (AE), laquelle fonction de correction (K) tient compte de la caractéristique du photocapteur (L),
e) et **en ce que** la fonction de correction (K) est déterminée en usine à différentes luminosités pour le capteur individuel au moyen d'un processus d'étalonnage et mémorisée dans le circuit électronique d'interprétation (AE).

2. Procédé selon la revendication 1, **caractérisé en ce que** l'augmentation de la luminosité (ΔE) est déterminée immédiatement après chaque allumage de l'installation d'éclairage (B).

3. Procédé selon la revendication 2, **caractérisé en ce que** l'augmentation de la luminosité (ΔE) est déterminée en outre à au moins un deuxième moment après l'allumage de l'installation d'éclairage (B) et prise en compte dans la formation de la valeur de luminosité ambiante corrigée (Ek).

4. Procédé selon l'une quelconque des revendications précédentes, **caractérisé en ce que** dans la phase de fonctionnement précédant l'allumage de l'installation d'éclairage (B), une valeur de luminosité corrigée (Ek) est formée à partir seulement de la luminosité ambiante détectée (Eges) en utilisant la fonction de correction (K) et comparée au seuil (Es).

5. Procédé selon l'une quelconque des revendications précédentes, **caractérisé en ce que** le seuil (Es) est augmenté après chaque allumage de l'installation d'éclairage (B) d'une valeur d'hystérésis (EHyst), laquelle valeur d'hystérésis (EHyst) est déterminée en fonction de la valeur de luminosité corrigée (Ek) présente immédiatement après le moment de l'allumage, en incluant l'augmentation de la luminosité (ΔE).

6. Procédé selon la revendication 5, **caractérisé en ce que** la valeur d'hystérésis (EHyst) est à peu près proportionnelle à la valeur de luminosité totale obtenue par la valeur de luminosité ambiante corrigée (Ek) y compris l'augmentation de la luminosité (ΔE).

7. Dispositif pour la commande d'une installation d'éclairage (B) contenant une unité de capteurs (SE) avec un capteur (S) pour la détection de personnes, un photocapteur (L) pour la détection de la luminosité ambiante (Eges), un circuit électronique d'interprétation (AE) et une partie de puissance (LT) pour le branchement de l'installation d'éclairage (B), et qui est conçue pour allumer l'installation d'éclairage (B) lorsqu'une personne a été détectée et si une valeur de luminosité ambiante corrigée (Ek) basée sur la luminosité ambiante (Eges) présente à un premier moment (t₁) est inférieure à un seuil (Es) prédéterminé, et
- le circuit électronique d'interprétation (AE) est conçu pour éteindre l'installation d'éclairage (B) après l'écoulement d'un délai suivant la détection d'une personne ou dès que la valeur de luminosité ambiante corrigée (Ek) dépasse le seuil (Es), et
- le circuit électronique d'interprétation (AE) est conçu, en vue de former la valeur de luminosité ambiante corrigée (Ek), pour soustraire de la luminosité ambiante totale détectée (Eges), pendant une période suivant immédiatement l'allumage de l'installation d'éclairage (B) au premier moment (t₁) et jusqu'à immédiatement après l'extinction de l'installation d'éclairage (B) à un deuxième moment (t₂), une augmentation de la luminosité (ΔE) de la luminosité ambiante (Eges) produite par l'installation d'éclairage (B),
**caractérisé en ce que**
- le circuit électronique d'interprétation (AE) est conçu pour former la valeur de luminosité ambiante corrigée (Ek) en utilisant une fonction de correction (K) mémorisée dans le circuit électronique d'interprétation (AE), laquelle fonction de correction (K) tient compte de la caractéristique du photocapteur (L) et
- **en ce que** le circuit électronique d'interprétation (AE) contient une mémoire de données non volatile pour l'enregistrement d'une fonction de correction (K) déterminée en usine à différentes luminosités pour le capteur individuel au moyen d'un processus d'étalonnage.

8. Dispositif selon la revendication 7, **caractérisé en ce que** le circuit électronique d'interprétation (AE) est conçu pour déterminer l'augmentation de la luminosité (ΔE) immédiatement après chaque allumage de l'installation d'éclairage (B).

9. Dispositif selon la revendication 8, **caractérisé en ce que** le circuit électronique d'interprétation (AE) est conçu pour déterminer en outre l'augmentation de la luminosité (ΔE) à au moins un autre moment après l'allumage de l'installation d'éclairage (B) et la prendre en compte pour former la valeur de luminosité ambiante corrigée (Ek).

10. Dispositif selon l'une des revendications 7 à 9, **caractérisé en ce qu'**il est un détecteur de présence ou un détecteur de mouvement.

11. Dispositif selon l'une des revendications précédentes, **caractérisé en ce que** le circuit électronique d'interprétation (AE) est conçu pour former une valeur de luminosité ambiante corrigée (Ek) pendant la première phase de fonctionnement avant l'allumage de l'installation d'éclairage (B) à partir seulement de la luminosité ambiante détectée (Eges) en utilisant la fonction de correction (K), et la comparer avec le seuil (Es).

12. Dispositif selon l'une des revendications 7 à 11, **caractérisé en ce que** le circuit électronique d'interprétation (AE) est conçu pour augmenter le seuil (Es) après chaque allumage de l'installation d'éclairage (B) d'une valeur d'hystérésis (EHyst), laquelle valeur d'hystérésis (EHyst) est définie en fonction de la valeur de luminosité ambiante corrigée (Ek) présente immédiatement après le moment de l'allumage, en incluant l'augmentation de la luminosité (ΔE).
